# EUROPÄISCHE PATENTSCHRIFT

(11) **EP 0 556 188 B1**
(45) Veröffentlichungstag und Bekanntmachung des Hinweises auf die Patenterteilung: **29.11.1995**
(21) Anmeldenummer: 91915311.4
(22) Anmeldetag: 10.09.1991
(51) Int. Cl.: B01D 35/16, B01D 29/11

(54) **KERZENANSCHWEMMFILTER ZUR RESTVOLUMENFILTRATION**
CANDLE PRECOATED FILTER FOR RESIDUAL VOLUME FILTRATION
FILTRE A COUCHES EN FORME DE BOUGIE POUR LA FILTRATION DU VOLUME RESIDUEL

(43) Veröffentlichungstag der Anmeldung: 25.08.1993
(73) Patentinhaber: DrM, Dr. Müller AG, CH-8708 Männedorf ZH (CH)
(72) Erfinder:
(86) Internationale Anmeldenummer: CH9100196
(87) Internationale Veröffentlichungsnummer: WO9304762

(56) Entgegenhaltungen:
- EP-A- 0 347 620
- CH-A- 658 401
- CH-A- 678 399

## Beschreibung

Die Erfindung betrifft Kerzenanschwemmfilter zur Restvolumenfiltration bestehend ans einem zylindrischen Druckbehälter mit konischem Boden und senkrecht an Sammelrohre angeordneten Filterelementen, in welchem wenigstens ein Rest-Filterelement gegen den Boden verlängert ist und aus einer Trennwand die das Restfilterelement im oberen Teil des Druckbehälters mediendicht von den übrigen Filterelementen abtrennt und im unteren Teil über die Länge der Filterelemente hinausragt.

Kerzenfilter der Art bestehen aus einem zylindrischen Gehäuse mit einem konischen Unterteil, in das mehrere, meist zu Registern zusammengefasste Filterkerzen eingebaut sind. Die Filterkerzen bestehen aus einem Trägerrohr, auf das ein starres oder flexibles Filtermittel aufgebracht ist. Die Filtration erfolgt durch Durchströmen der Filterschicht von aussen nach innen, wobei sich auf dem Filtermittel rohrförmig ein Filterkuchen aufbaut. Das Filtrat strömt durch das Trägerrohr zum Auslassstutzen. Die Abreinigung geschieht durch kurzzeitige, stossförmige Rückströmung durch das Filtermittel.

Aus der CH-A-658 401 ist ein Kerzenanschwemmfilter bekannt, in welchem eine oder mehrere Filterkerzen mit einem Hüllrohr versehen sind, das unten offen und oben dicht mit der Filterkerze verbunden ist. Umhüllte und nicht umhüllte Filterkerzen sind mit separaten Auslaufventilen versehen. Werden Filtereinlass und Auslass der nicht umhüllten Filterkerzen geschlossen und das Filtergehäuse mit einem Gas beaufschlagt, wird der Filterinhalt solange durch die umhüllten Filterkerzen abfiltriert, bis das Niveau der Trübe die Hüllrohrunterkante erreicht hat.

Das bekannte Kerzenfilter zeigt jedoch Nachteile. Sobald nämlich bei geschlossenem Auslauf der nicht umhüllten Filterkerzen das Filtergehäuse mit Gas beaufschlagt wird, kann der Filterkuchen je nach Zusammensetzung wegen des fehlenden Differenzdruckes von den nicht umhüllten Filterkerzen abfallen. Der Filterkuchen wird dann in den engen ringförmigen Querschnitt zwischen Hüllrohr und Filterkerze gedrückt und verstopft diesen sehr schnell. Dies führt zu unvertretbar langen Restfiltrationszeiten. Selbst wenn der abgefallene Filterkuchen nicht in die Filterrohre gedrückt wird (weil die Unterkante der Hüllrohre recht hoch im Filtergehäuse angebracht ist), treten beim Abreinigen der umhüllten Filterkerzen Probleme auf. Der Filterkuchen haftet am Hüllrohr innen, so dass sich zumindest nach mehrfacher Abreinigung das Hüllrohr ganz oder teilweise zusetzt.

Aufgabe der Erfindung ist es, ein Kerzenanschwemmfilter so zu verbessern, dass erstens keine Rückstände die Restvolumenfiltration behindern und damit Restfiltrationszeiten erreicht werden, die deutlich kürzer sind als die Hauptfiltrationszeit, und zweitens das im Filter verbleibende Restvolumen variabel gestaltet und so dem Kuchenvolumen angepasst wird.

Diese Aufgabe wird erfindungsgemäss dadurch gelöst, dass im Bereich des hinausragenden Teils des Restfilterelements in der Trennwand wenigsten eine verschliessbare Öffnung vorgesehen ist.

Da der freie Querschnitt um die Filterkerzen durch die Trennwand praktisch nicht eingeschränkt wird, besteht keinerlei Verstopfungsgefahr, weder bei der Restvolumenfiltration noch bei der Abreinigung der Filterkerzen.

Die Filterkerzen im Restfiltrationsraum und Haupftfiltrationsraum besitzen separate Auslassventile. Nach Schliessen der Trübzufuhr und des Auslasses der Hauptfilterkerzen und Beaufschlagen des Hauptfiltrationsraumes mit Gas, gelingt es, das gesamte Trübvolumen im Filtrationsraum bis zur Unterkante der Trennwand über die Restfilterkerzen abzufiltrieren. Erst wenn das Trübenniveau die Trennwandunterkante unterschreitet, erfolgt ein Gasdurchschlag und die Filtration stoppt.

Es ist zweckmässig, eine oder mehrere von aussen verschliessbare Oeffnungen untereinander anzuordnen. Das hat den Vorteil, dass das Restvolumen im Filtergehäuse bei Gasdurchschlag variabel gestaltet und damit dem Kuchenvolumen angepasst werden kann. Besonders vorteilhaft wirkt sich eine Vorrichtung aus, die aus einem Schlitz in der Trennwand besteht, der durch einen Schieber schleusentorartig von aussen geschlossen werden kann. Bei Beginn der Restfiltration ist der Schieber in der Trennwand zunächst ganz geöffnet. Der von den Hauptfilterkerzen abfallende Filterkuchen wird sich im Konus des Filtergehäuses sammeln und nur die darüber stehende Trübe in den Restfiltrationsraum gedrückt. Nach Beginn des Gasdurchschlages wird der Schieber in der Trennwand langsam geschlossen, so dass praktisch das minimal mögliche Restvolumen erreicht werden kann.

Die Trennwand kann in ihrer einfachsten Ausführung eine ebene Wand darstellen, die in einen symmetrischen Konus hineinragt. Sie kann aber auch bei einem Filter mit symmetrisch-konischem Unterteil als Zentralrohr oder Zweifach-Trennwand ausgebildet sein.

Die Erfindung soll anhand einer Zeichnung näher beschrieben werden.

Es zeigen:
- Fig. 1: einen Schnitt durch das erfindungsgemässe Filter mit einer Trennwand.
- Fig. 2: das erfindungsgemässe Filter, wobei im unteren Teil der Trennwand zwei von aussen durch Ventile verschliessbare Oeffnungen angeordnet sind, die es ermöglichen, dass drei unterschiedliche Niveaus des Restvolumens eingestellt werden können.
- Fig. 3,3a: das erfindungsgemässe Filter, wobei im unteren Teil der Trennwand ein Schlitz eingelassen ist, der durch einen von aussen betätigbaren Schieber stufenlos verschlossen werden kann.

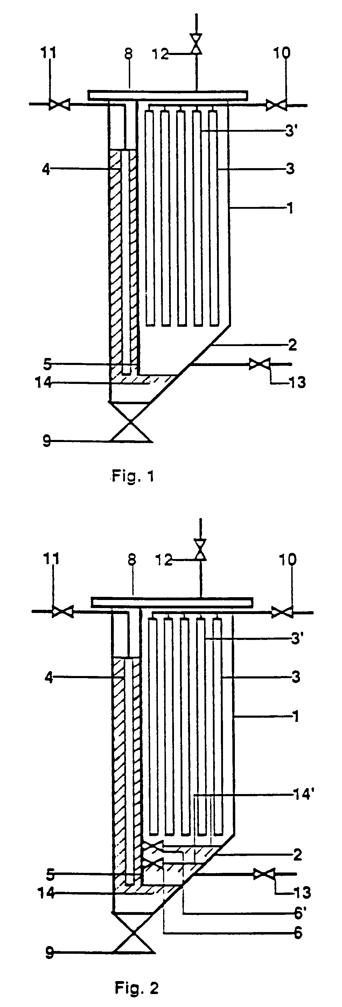

Nach Fig. 1 besteht das Filter aus einem Druckbehälter 1 mit einem konischen Boden 2. Im Innern des Druckbehälters 1 sind mehrere Filterelemente 3, 3' an Sammelrohren angeordnet, welche ausserhalb der Behälterwand ein Ventil 10 abschliesst. Restfilterelemente 4 sind über ein Sammelrohr mit einem Ventil 11 ausserhalb der Behälterwand verbunden. Eine Trennwand 5 ist in den Druckbehälter eingeschweisst und gegen einen Deckel 8 abgedichtet. Im Deckel 8 ist eine Druckleitung mit einem Ventil 12 vorgesehen. Im Apex des Konus 2 ist ein Auslassventil 9 angeordnet sowie eine Leitung mit einem Ventil 13 für die Trübezufuhr. Das Niveau des Restvolumens, das sich einstellt, wenn das Filter über das Ventil 12 beaufschlagt wird, ist mit Pos. 14 bezeichnet. Die Ausführung gemäß Figur 1 fällt nicht unter dem Schutzumfang vom Anspruch 1.

Nach Fig. 2 sind im unteren Teil der Trennwand 5 von aussen durch Ventile 6, 6'verschliessbare Oeffnungen eingebaut, mit denen das Niveau des Restvolumens 14,14'stufenweise von der Oberkante der obersten Oeffnung bis zu Unterkante der Trennwand verändert werden kann. Mit diesen Ventilen kann das Volumen der Restfiltration stufenweise verringert werden. Anstelle der Ventile kann auch ein Schlitz in die Trennwand eingelassen sein, der von aussen durch einen Schieber verschlossen werden kann. Dadurch kann das Volumen der Restfiltration stufenlos verringert und damit genau dem eventuell abgefallenen Filterkuchenvolumen aus dem Hauptfiltrationsraum angepasst werde.

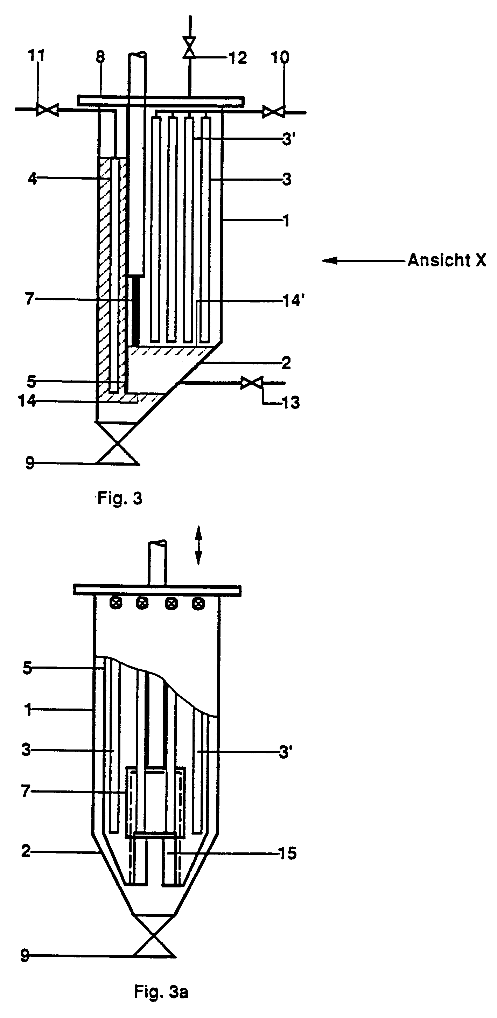

Nach Fig. 3 und 3a ist in die Trennwand 5 ein Schlitz 15 eingelassen, der durch einen von aussen betätigbaren Schieber 7 stufenlos abgedeckt (verschlossen) werden kann. Hiermit kann das Niveau des nach der Beaufschlagung des Filters mit Druckgas im Gehäuse verbleibenden Restvolumen von der Oberkante des Schlitzes 15 bis zur Unterkante der Trennwand 5 stufenlos abgesenkt werden.

## Patentansprüche

1. Kerzenanschwemmfilter zur Restvolumenfiltration bestehend aus einem zylindrischen Druckbehälter (1) mit konischem Boden und senkrecht an Sammelrohre angeordneten Filterelementen (3,3'), in welchem wenigstens ein Rest-Filterelement (4) gegen den Boden verlängert ist und aus einer Trennwand (5), die das Rest-Filterelement (4) im oberen Teil des Druckbehälters (1) mediendicht von den übrigen Filterelementen (3,3') abtrennt und im unteren Teil über die Länge der Filterelemente (3,3') hinausragt, dadurch gekennzeichnet, dass im Bereich des hinausragenden Teils des Rest-Filterelements (4) in der Trennwand (5) wenigstens eine von aussen verschliessbare Oeffnung (6) vorgesehen ist.

2. Kerzenanschwemmfilter nach Anspruch 1, dadurch gekennzeichnet, dass im unteren Teil der Trennwand (5) ein Schlitz (15) eingelassen ist, der durch einen von aussen stufenlos bewegbaren Schieber (7) verschliessbar ist.

## Claims

1. A candle deposit filter for residual volume filtration consisting of a cylindrical pressure container (1) with a conical base and filter elements (3, 3') arranged vertically on collection pipes, in which container at least one residual filter element (4) is extended towards the base and of a partition (5) which in the upper part of the pressure container (1) partitions the residual filter element (4) from the remaining filter elements (3, 3') so as to be impervious to media and in the lower part projects beyond the length of the filter elements (3, 3'), characterised in that in the region of the projecting part of the residual filter element (4) at least one opening (6), closable from outside, is provided in the partition (5).

2. A candle deposit filter accordiing to claim 1, characterised in that in the lower part of the partition (5) a slit (15) is let in, which is closable by a slide valve (7) which is steplessly movable from outside.

## Revendications

1. Filtre à couches en forme de bougie pour la filtration de volumes résiduels, formé d'un récipient cylindrique sous pression (1) qui comporte un fond conique et des éléments filtrants (3, 3') disposés à la verticale sur des tubes collecteurs, et dans lequel au moins un élément de filtration résiduelle (4) se prolonge vers le fond, et d'une cloison (5) qui, dans la partie supérieure du récipient sous pression (1), sépare de façon étanche à l'agent l'élément de filtration résiduelle (4) des autres éléments filtrants (3, 3') et qui, dans la partie inférieure, dépasse de la longueur des éléments filtrants (3, 3'), caractérisé en ce que dans la zone de la partie saillante de l'élément de filtration résiduelle (4), il est prévu dans la cloison (5) au moins un orifice (6) apte à être fermé de l'extérieur.

2. Filtre à couches en forme de bougie selon la revendication 1, caractérisé en se qu'il est prévu, dans la partie inférieure de la cloison (5), une fente (15) qui est apte à être fermée par un coulisseau (7) apte à être déplacé progressivement de l'extérieur.
